# EUROPÄISCHE PATENTANMELDUNG

(11) **EP 1 072 375 A2**
(43) Veröffentlichungstag der Anmeldung: **31.01.2001**
(21) Anmeldenummer: 00115117.4
(22) Anmeldetag: 12.07.2000
(51) Int. Cl.: B29C 44/34

(54) **Verfahren und Vorrichtung zur Herstellung von Polymerschäumen**

(30) Priorität: 23.07.1999 DE 19934693
(71) Anmelder: FRAUNHOFER-GESELLSCHAFT ZUR FÖRDERUNG DER ANGEWANDTEN FORSCHUNG E.V., 80636 München (DE)
(72) Erfinder: Henning, Frank, Dipl.-Ing., 76327 Pfinztal (DE); Tröster, Stefan, Dipl.-Ing., 76137 Karlsruhe (DE); Radtke, Andreas, Dipl.-Ing., 76227 Karlsruhe (DE); Elsner, Peter, Dr.-Ing., 73271 Holzmaden (DE); Völkle, Dietmar, Dipl.-Ing., D-76327 Ptinztal (CH); Gleich, Klaus, Dr. rer. nat., 90455 Nürnberg (DE)
(74) Vertreter: Lichti, Heiner, Dipl.-Ing.

(57) **Zusammenfassung**

Bei einem Verfahren zur Herstellung von Polymerschäumen, indem ein Polymer in einer Plastifiziereinheit mit wenigstens einer Schnecke (2) gefördert, in eine Schmelze überführt und der Polymerschmelze wenigstens ein fluides Treibmittel von innen her unter Druck zugesetzt wird, wird das fluide Treibmittel durch die Schnecke der Plastifiziereinheit in die Polymerschmelze vorzugsweise feindispers eingebracht. Eine Vorrichtung zur Durchführung eines solchen Verfahrens weist wenigstens eine Schnecke (2) mit einem zentralen Kanal (5) auf, der über sein der Düse abgewandtes Ende (5a) mit dem Treibmittel beaufschlagbar ist. Im Bereich des gegenüberliegenden Endes ist die Schnecke mit wenigstens einer Zuführung für das Treibmittel in Form eines den Kanal umschließenden, porösen Abschnitts (4) versehen.

## Beschreibung

Die Erfindung betrifft ein Verfahren zur Herstellung von Polymerschäumen, indem ein Polymer in einer Plastifiziereinheit mit wenigstens einer Schnecke gefördert, in eine Schmelze überführt und der Polymerschmelze wenigstens ein fluides Treibmittel von innen her unter Druck zugesetzt wird, sowie eine Vorrichtung zur Durchführung eines solchen Verfahrens.

Thermoplastische Polymere und hieraus durch Expansion hergestellte Polymerschäume finden vielfältige Verwendung. Polymerschäume werden zumeist zur Isolation gegen Wärme, Schall oder Stoß bei gleichzeitiger Nutzung ihres geringen Gewichtes gegenüber Kompaktmaterialien eingesetzt. Sie weisen eine gute Formbeständigkeit und ein hohes Rückstellvermögen auf, so daß bleibende Verformungen vermieden werden. Auch ihre geringe Feuchteaufnahme kommt vielen Einsatzzwecken zugute. Schließlich sind Polymerschäume im allgemeinen vollständig recyclierbar und somit umweltfreundlich.

Aus Polymerschäumen bestehende Formteile lassen sich als Platten, als dreidimensionale Formkörper oder als Hohlkörper herstellen. Solche Formteile werden insbesondere in der Automobilindustrie, beispielsweise für Innenverkleidungen, Sonnenblenden, Instrumententafeln, Armaturenbretter, Cockpitmodule, Motorraumauskieldungen, Stoßfänger, Fronthauben etc., für Möbel, insbesondere Gartenmöbel, für Sportgeräte, für Verpackungs- oder Isolationsbehälter etc. verwendet. Um eine dekorative oder auch nur glatte Oberfläche zu erhalten, wird der Polymerschaum häufig zumindest sichtseitig beschichtet oder vollständig umhüllt, wobei der Schicht- bzw. Hüllwerkstoff entweder durch Kleber, Lösungsmittel oder dergleichen aufgebracht oder unter zumindest oberflächigem Verschmelzen auf diesen auflaminiert bzw. aufkaschiert wird (DE 37 22 873 A1, DE 41 41 113 A1).

Zur Herstellung solcher Formteile sind direkte und indirekte Schäumverfahren bekannt. Beim indirekten Schäumen werden insbesondere Partikelschäume hergestellt, indem vorgeschäumte und/oder mit einem Treibmittel versetzte Polymerpartikel mittels einer heißen Gasphase, insbesondere Heißdampf, oder mittels Mikrowellenenergie unter Zuhilfenahme mikrowellenabsorbierender Medien in einer Form oberflächig miteinander verschmolzen werden. Hierbei kann gegebenenfalls eine Dekorschicht, z.B. eine Folie aus einem thermoplastischen Polyolefin, hinterschäumt und mit den Schaumpartikeln verbunden werden. Die Nachteile dieses indirekten Schäumverfahrens liegen insbesondere bei den relativ hohen Kosten der Schaumpartikel und der mit ihrem großen Volumen verbundenen Lagerkosten. Weiterhin ist der Energiebedarf vergleichsweise hoch und sind die Schaumeigenschaften, insbesondere die Schaumdichte, verfahrenstechnisch kaum modifizierbar.

Im Gegensatz zu den indirekten Schäumverfahren wird beim direkten Schäumen ein kompaktes Polymergranulat plastifiziert, mit chemischen und/oder physikalischen Treibmitteln versetzt und z.B. mittels Spritzgießmaschinen, Schnecken- oder Kolbenextrudern direkt zum Formteil verarbeitet. Während chemische Treibmittel meist zusammen mit dem Granulat in fester Form aufgegeben werden und sich erst durch Wärmezufuhr unter Freigabe des Treibgases zersetzen, werden physikalische Treibmittel meist in gasförmigem Zustand der Plastifiziereinheit aufgegeben. Da bei chemischen Treibmitteln deren Zersetzung und die Gasausbeute und somit die Schaumdichte stark von den Verfahrensparametern abhängt, ist die Schaumdichte im Falle des Einsatzes physikalischer Treibmittel verhältnismäßig frei variierbar. Durch den Einsatz physikalischer Treibmittel sind darüber hinaus wesentlich geringere Schaumdichten und homogenere Schaumstrukturen erzielbar. Weiterhin beeinflussen bereits geringe Zusätze gasförmiger Treibmittel die Werkstoffeigenschaften thermoplastischer Polymere, indem z.B. die Glasübergangstemperatur, die Schmelzwärme und die Viskosität erniedrigt werden und dadurch eine geringere Verarbeitungstemperatur möglich wird. Darüber hinaus führen in der Polymerschmelze gelöste Gase bei schneller Expansion zu zelligen und feinporigen Polymerschäumen.

Beim direkten Schäumen ist es bekannt, der in einer Plastifiziereinheit gebildeten Polymerschmelze ein fluides Treibmittel zuzusetzen. Die EP 0 588 321 A1 beschreibt ein Verfahren zur Herstellung von Schaumpartikeln aus Polypropylen (PP), indem einem Extruder mit der Polymerschmelze ein Treibmittel, z.B. n-Butan/iso-Butan, zugesetzt und das aufgeschäumte Extrudat mit Schneideeinrichtungen zerkleinert wird. Die Schaumpartikel können anschließend unter Bildung von Formteilen miteinander versintert werden. Gemäß DE 43 05 866 A1 wird die dem Extruder zugesetzte Treibmittelmenge bei konstantem Vordruck mit einem Stellventil in Abhängigkeit von der geförderten Polymermasse, insbesondere in Abhängigkeit von der Extruderdrehzahl, geregelt.

Das Treibmittel wird herkömmlich von außen über eine Zuführung in der Wandung der Plastifiziereinheit zugesetzt und penetriert in die geförderte Polymerschmelze. Aufgrund der im wesentlichen punktuellen Zugabe des Treibmittels ist eine vollständige und homogene Einmischung des Treibmittels in die Schmelze schwierig und die Herstellung mikrozellularer Polymerschäume fast unmöglich. In jedem Fall muß der Abstand zwischen Treibmittelzuführung und Düse der Plastifiziereinheit hinreichend groß sein, um eine annähernd gleichmäßige Verteilung des Treibmittels in der Schmelze zu erreichen. Hieraus resultiert eine größere Baulänge und eine unerwünscht lange Verweilzeit der Schmelze in der Plastifiziereinheit.

Die DE 25 04 702 A1 beschreibt ein Verfahren zur Herstellung von Polymerschäumen, insbesondere zum Aufextrudieren des Polymerschaums auf eine laufende Seele. Hierbei wird ein fließfähiger Kunststoff mittels eines Extruders in eine nachgeschaltete Preßmatrize radial hineingefördert. In der Preßmatrize wird dem Kunststoff ein gasförmiges Treibmittel zugesetzt. Hierzu dient ein in der Preßmatrize zentral angeordnetes Innenrohr, das in einem porösen Konus endet, durch den das über Kanäle zugeführte Treibmittel in den den Konus umfließenden Kunststoff eingedrückt werden soll. Nachteilig ist die Erfordernis eines gesonderten "Begasungsraums", in den die Polymerschmelze überführt werden muß. Dabei muß die über eine relativ enge Öffnung einströmende Schmelze um den porösen Konus herum auf einen wesentlich größeren Querschnitt verteilt werden. Zudem wird die Schmelze dabei um 90° umgelenkt. Die Homogenität der Mischung hängt somit maßgeblich von den Strömungsvorgangen an der porösen Oberfläche des Konus' und der Viskosität der Schmelze über den ringförmigen Querschnitt des Begasungsraums ab.

Aus DE-OS 17 04 754 ist es bekannt, eine Dosiermischung zum Beaufschlagen einer Polymerschmelze mit einem Treibmittel an einem von der Polymerschmelze umströmten, rotierenden Teil nach Art eines Wirbelelements anzuordnen, um das Extrudat mit dein zugesetzten Treibmittel homogen zu durchmischen. Das Wirbelelement ist im Spritzkopf eines Extruders angeordnet. Diese Anordnung ist insbesondere hinsichtlich der Lagerung des Wirbelelements aufwendig und teuer.

Der Erfindung liegt die Aufgabe zugrunde, unter Vermeidung der vorgenannten Nachteile ein Verfahren und eine Vorrichtung zur direkten kostengünstigen Herstellung von Formteilen aus beliebigen thermoplastischen Polymerschäumen vorzuschlagen.

Der erste Teil dieser Aufgabe wird erfindungsgemäß bei einem Verfahren der eingangs genannten Art dadurch gelöst, daß das fluide Treibmittel durch die Schnecke der Plastifiziereinheit der Polymerschmelze von innen zugesetzt wird. Erfindungsgemäß wird das Treibmittel also weder von außen durch die Wandung der Plastifiziereinheit, noch über einen separaten Begasungsraum, sondern über die rotierende Schnecke der Plastifiziereinheit zugesetzt, wobei die Schnecke an ein Treibmittelreservoir angeschlossen ist. Auf diese Weise wird die von der Schnecke eingebrachte Umwälzbewegung zusätzlich als Mischbewegung genutzt, um das Treibmittel homogen in die Schmelze einzumischen. Weitere Dosier- bzw. Mischeinrichtungen werden somit entbehrlich. Um das aus der Düse austretende Polymer gleichmäßig aufzuschäumen, können die Massenströme von Treibmittel und Polymer in bekannter Weise jeweils konstant und proportional zueinander geregelt werden. Die Plastifiziereinheit kann als Extruder, Spritzgießmaschine oder dgl. ausgebildet sein.

Vorzugsweise wird das fluide Treibmittel über einen porösen Flächenabschnitt der Schnecke feindispers zugesetzt. Das Treibmittel wird in einem Bereich der Schnecke zugesetzt, in welchem das Polymer bereits vollständig plastifiziert ist. Dies kann in kurzem Abstand vor der Düse sein, da durch die feindisperse Zugabe in Verbindung mit der Umwalzbewegung der Schnecke nur eine kurze Mischstrecke erforderlich ist, um ein homogenes Einmischen des Treibmittels in die Polymerschmelze zu gewährleisten.

In bevorzugter Ausführung wird ein in der Polymerschmelze zumindest teilweise lösliches Treibmittel verwendet, so daß das Treibmittel zumindest teilweise, vorzugsweise vollständig, in der Polymerschmelze gelöst und nach Druckentlastung ein homogener, feinporiger, gegebenenfalls auch mikrozellularer Polymerschaum erhalten wird.

Die Dichte des Polymerschaums kann bevorzugt durch Steuerung des Drucks bzw. der zugesetzten Menge des Treibmittels eingestellt werden, wobei gegebenenfalls in einem Bereich der Plastifiziereinheit, in dem der gewünschte Anteil des Treibmittels in der Polymerschmelze in Lösung gegangen ist, eine an sich bekannte Entgasungseinrichtung vorgesehen werden kann, um überschüssiges, gasförmiges Treibmittel aus der Plastifiziereinheit zu entfernen.

Gemäß einer bevorzugten Ausführungsform des erfindungsgemäßen Verfahrens ist vorgesehen, daß das fluide Treibmittel temperiert wird. Bedarfsweise kann das Treibmittel z.B. erwärmt werden, um eine lokale Abkühlung der Schmelze beim Eindiffundieren des Treibmittels zu vermeiden. Derart kann das erwärmte Treibmittel zum schnellen und effektiven Vorheizen der Schnecke verwendet und gegebenenfalls auf eine zusätzliche Heizeinrichtung für die Schnecke verzichtet werden. Das Treibmittel kann insbesondere auch gekühlt werden, um der bei der Kompression des Treibmittels entstehenden Wärme sowie gegebenenfalls der beim Lösen des Treibmittels in der Polymerschmelze freigesetzten Lösungswärme entgegenzuwirken und eine Überhitzung der Plastifiziereinheit zu verhindern.

Im übrigen ist vorgesehen, daß das erfindungsgemäße Verfahren kontinuierlich oder chargenweise durchgeführt wird. Während in erstgenanntem Fall die die Plastifiziereinheit verlassende, treibmittelbeladene Polymerschmelze z.B. unter gezieltem Druckabbau kontinuierlich aufgeschäumt wird, kann die Polymerschmelze im letztgenannten Fall beispielsweise diskontinuierlich in eine Formeinheit eingetragen werden.

Eine Vorrichtung zur Herstellung von Polymerschäumen mit einer Plastifiziereinheit mit wenigstens einer Schnecke zur Förderung einer Polymerschmelze, wenigstens einer die Polymerschmelze ausbringenden Düse und wenigstens einer Zuführung zum Einbringen wenigstens eines fluiden Treibmittels unter Druck von innen her in die Polymerschmelze zeichnet sich dadurch aus, daß die Zuführung ein poröser Flächenabschnitt der Schnecke ist.

In bevorzugter Ausführung weist die Schnecke einen im wesentlichen zentralen Kanal auf, der über sein der Düse abgewandtes Ende mit dem Treibmittel gespeist wird, während der die Zuführung des Treibmittels bildende poröse, axiale Flächenabschnitt der Schnecke nahe dessen Ende angeordnet ist und den Kanal einschließt. Die Zuführung ist zweckmäßig in einem Bereich der Schnecke angeordnet, an dem das jeweilige Polymer vollständig plastifiziert ist. Es können eine oder auch mehrere Zuführungen in Form poröser Flächenabschnitte der Schnecke vorgesehen sein.

Bevorzugt erstreckt sich der poröse Flächenabschnitt im wesentlichen um den gesamten Umfang der Schnecke. Der poröse Flächenabschnitt der Schnecke kann insbesondere aus einem Sintermetall oder einer Sintermetallegierung oder auch aus Keramik, z.B. einer Siliciumcarbid-Keramik, bestehen. Besteht der poröse Schneckenabschnitt aus einer Keramik, kann sie eine Armierung, z.B. eine Faserverstärkung aus insbesondere synthetischen Fasern, z.B. Carbon-, Glas-, Aramidfasern oder dergleichen, aufweisen. Selbstverständlich kann sich der poröse Flächenabschnitt auch nur über einen Teil des Umfangs der Schnecke erstrecken; es können z.B. ein oder mehrere Sintermetallsegmente für die Schnecke vorgesehen sein.

In bevorzugter Ausführung ist an dem der Düse abgewandten, offenen Ende des Kanals der Schnecke eine Dosiereinrichtung für das fluide Treibmittel angeschlossen, wobei der Dosiereinrichtung vorzugsweise ein Druckspeicher vorgeschaltet ist, aus dem das Treibmittel mittels der Dosiereinrichtung entnehmbar ist. Ferner kann am Druckspeicher oder zwischen diesem und der Plastifiziereinheit eine Temperiereinheit für das Treibmittel vorgesehen sein.

Gemäß einer Ausführungsform zur kontinuierlichen Durchführung des erfindungsgemäßen Verfahrens ist vorgesehen, daß der Düse eine Kalibriereinheit mit größerem freien Querschnitt als der Querschnitt der Düse nachgeschaltet ist, um die Polymerschmelze kontinuierlich auf zuschäumen. Eine Ausführungsform zur diskontinuierlichen Durchführung des erfindungsgemäßen Verfahrens sieht vor, daß der Plastifiziereinheit ein die Polymerschmelze aufnehmender Zwischenspeicher nachgeschaltet ist, wobei der Zwischenspeicher beispielsweise eine Kolbendosiereinheit ist, der eine Formeinheit nachgeschaltet ist.

Nachfolgend ist die Erfindung anhand von Ausführungsbeispielen unter Bezugnahme auf die Zeichnungen näher erläutert. Es zeigen:
- Fig.1: einen schematischen Schnitt einer erfindungsgemäßen Schnecke;
- Fig.2: eine schematische Ansicht der Schnecke gemäß Fig. 1;
- Fig.3: eine Ansicht einer Anlage zur diskontinuierlichen Durchführung des erfindungsgemäßen Verfahrens und
- Fig.4: eine Ansicht einer Anlage zur kontinuierlichen Durchführung des erfindungsgemäßen Verfahrens.

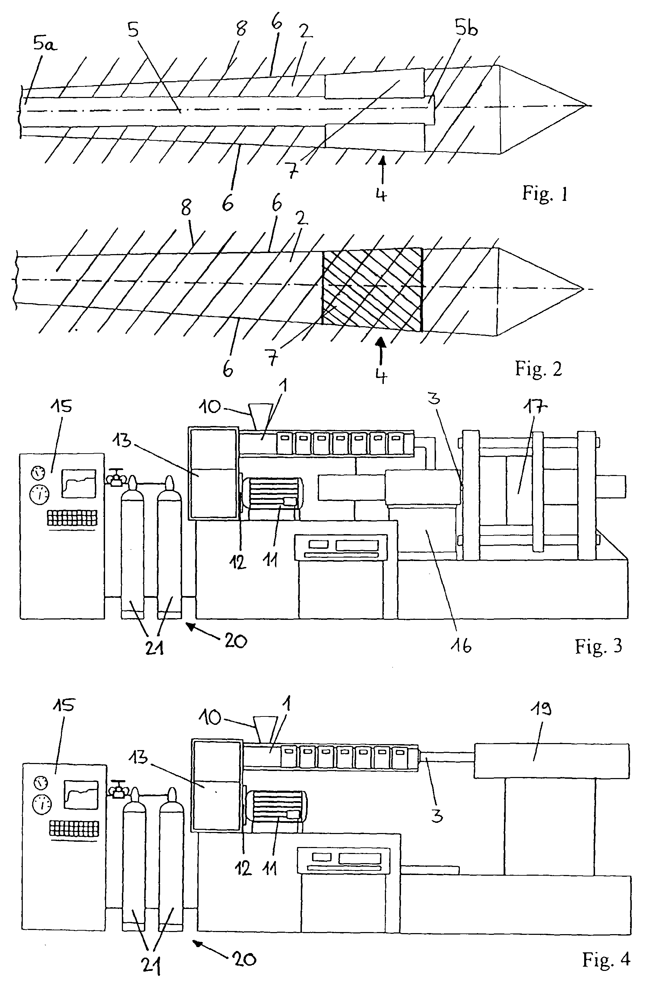

Die in Fig. 1 dargestellte Schnecke 2 einer Plastifiziereinheit 1 (Fig. 3 und 4) weist einen zentralen Kanal 5 auf, der über sein offenes Ende 5a mit einem fluiden Treibmittel versorgt wird. Am gegenüberliegenden Ende 5b des Kanals 5 ist eine Zuführung 4 zum Einspeisen des Treibmittels in die Plastifiziereinheit angeordnet. Die Zuführung 4 ist von einem den Kanal 5 umschließenden axialen Abschnitt 7 der Schnecke 2 gebildet. Der Abschnitt 7 besteht beispielsweise aus einem porösen Werkstoff, z.B. einem Sintermetall, einer Sintermetallegierung oder einer Keramik. In der gezeigten Ausführungsform erweitert sich der Querschnitt der Schnecke 2 in Transportrichtung.

Der poröse Flächenabschnitt 7 erstreckt sich bei der gezeigten Ausführungsform über den gesamten Umfang der Schnecke 2 (Fig. 2), so daß das unter Überdruck zugesetzte Treibmittel über eine große Kontaktfläche feindispers in die Polymerschmelze eindiffundiert und homogen in dieselbe eingemischt wird.

Fig. 3 zeigt eine Anlage zur diskontinuierlichen Herstellung direktgeschäumter Polymer-Formteile. Die Anlage weist eine Plastifiziereinheit 1 in Form eines Extruders mit einer gemäß Fig. 1 oder 2 ausgebildeten Schnecke und einem Aufgabetrichter 10 für das Polymergranulat auf. Die Schnecke der Plastifiziereinheits 1 ist über einen Elektromotor 11, eine Kupplung 12 und ein Getriebe 13 angetrieben. Die Plastifiziereinheit 1 mündet in einen als Kolbendosierer ausgebildeten, geschlossenen Zwischenspeicher 16, aus dem das Extrudat über eine Düse 3 in eine Formeinheit 17 diskontinuierlich überführbar ist. Eine Dosiereinrichtung 15 für das in einem Druckspeicher 20 mit Druckflaschen 21 enthaltene fluide Treibmittel, z.B. Stickstoff, Kohlendioxid od. dgl., sorgt für die Zuführung des Treibmittels in der gewünschten Menge zu der Schnecke. In dem die Dosiereinrichtung 15 aufnehmenden Schrank kann ferner eine (nicht dargestellte) Temperiereinheit für das Treibmittel untergebracht sein. Unmittelbar nach Austritt des mit dem Treibmittel versetzten Extrudates aus der Düse 3 schäumt das zumindest teilweise gelöste Treibmittel das Polymer unter Bildung eines feinporigen, homogenen Polymerschaums auf.

Die in Fig. 4 dargestellte Anlage zur kontinuierlichen Herstellung von direkt geschäumten Polymer-Formteilen weist anstelle der Formeinheit 17 (Fig. 3) eine der Düse 3 nachgeschaltete Kalibriereinheit 19 auf. Der freie Querschnitt der Kalibriereinheit 19 ist größer als der Querschnitt der Düse 3, so daß das Extrudat aufgrund der Druckentlastung aufgeschäumt und unmittelbar zu einem Formteil, z.B. einem Profil, Rohr, Schlauch od. dgl, verarbeitet werden kann.

Die in Fig. 3 oder 4 dargestellte Anlage zum Direktschäumen ist beispielsweise zur Herstellung von extrudiertem Polypropylen (PP) mit einer homogenen Dichteverteilung von bis zu 20 g/l geeignet.

## Patentansprüche

1. Verfahren zur Herstellung von Polymerschäumen, indem ein Polymer in einer Plastifiziereinheit mit wenigstens einer Schnecke gefördert, in eine Schmelze überführt und der Polymerschmelze wenigstens ein fluides Treibmittel von innen her unter Druck zugesetzt wird, dadurch gekennzeichnet, daß das fluide Treibmittel durch die Schnecke (2) der Plastifiziereinheit (1) der Polymerschmelze zugesetzt wird.

2. Verfahren nach Anspruch 1, dadurch gekennzeichnet, daß das fluide Treibmittel über einen porösen Flächenabschnitt (7) der Schnecke (2) feindispers zugesetzt wird.

3. Verfahren nach Anspruch 1 oder 2, dadurch gekennzeichnet, daß ein in der Polymerschmelze zumindest teilweise lösliches Treibmittel verwendet wird.

4. Verfahren nach einem der Ansprüche 1 bis 3, dadurch gekennzeichnet, daß in der Plastifiziereinheit (1) ein Druck aufrechterhalten wird, der wenigstens dem Lösungsdruck des fluiden Treibmittels in der Polymerschmelze entspricht.

5. Verfahren nach einem der Ansprüche 1 bis 4, dadurch gekennzeichnet, daß die Dichte des Polymerschaums durch Steuerung des Drucks bzw. der Menge des fluiden Treibmittels eingestellt wird.

6. Verfahren nach einem der Ansprüche 1 bis 5, dadurch gekennzeichnet, daß das fluide Treibmittel temperiert wird.

7. Verfahren nach einem der Ansprüche 1 bis 6, dadurch gekennzeichnet, daß die die Plastifiziereinheit verlassende Polymerschmelze unter gezieltem Druckabbau kontinuierlich aufgeschäumt wird.

8. Verfahren nach einem der Ansprüche 1 bis 6, dadurch gekennzeichnet, daß die Polymerschmelze diskontinuierlich in eine Formeinheit (17) eingetragen wird.

9. Vorrichtung zur Herstellung von Polymerschäumen mit einer Plastifiziereinheit (1) mit wenigstens einer Schnecke (2) zur Förderung einer Polymerschmelze, wenigstens einer die Polymerschmelze ausbringenden Düse (3) und wenigstens einer Zuführung (4) zum Einbringen wenigstens eines fluiden Treibmittels unter Druck von innen her in die Polymerschmelze, insbesondere zur Durchführung des Verfahrens nach einem der Ansprüche 1 bis 8, dadurch gekennzeichnet, daß die Zuführung (4) ein poröser Flächenabschnitt (7) der Schnecke (2) ist.

10. Vorrichtung nach Anspruch 9, dadurch gekennzeichnet, daß die Schnecke (2) einen im wesentlichen zentralen Kanal (5) aufweist, der über sein der Düse (3) abgewandtes, offenes Ende (5a) mit dem Treibmittel beaufschlagbar ist, und die Zuführung (4) des Treibmittels von dem im Bereich des der Düse (3) zugewandten, geschlossenen Endes (5b) des Kanals (5) angeordneten, den Kanal (5) einschließenden, porösen, axialen Flächenabschnitt (7) der Schnecke (2) gebildet ist.

11. Vorrichtung nach Anspruch 9 oder 10, dadurch gekennzeichnet, daß sich der poröse Flächenabschnitt (7) im wesentlichen über den gesamten Umfang der Schnecke (2) erstreckt.

12. Vorrichtung nach einem der Ansprüche 9 bis 11, dadurch gekennzeichnet, daß der poröse Flächenabschnitt (7) aus Sintermetall besteht.

13. Vorrichtung nach einem der Ansprüche 9 bis 11, dadurch gekennzeichnet, daß der poröse Flächenabschnitt (7) aus Keramik besteht.

14. Vorrichtung nach Anspruch 13, dadurch gekennzeichnet, daß der poröse Flächenabschnitt (7) eine Armierung aufweist.

15. Vorrichtung nach einem der Ansprüche 10 bis 14, dadurch gekennzeichnet, daß an dem Kanal (5) der Schnecke (2) eine Dosiereinrichtung (15) für das fluide Treibmittel angeschlossen ist.

16. Vorrichtung nach Anspruch 15, dadurch gekennzeichnet, daß ein Druckspeicher (20) für das fluide Treibmittel vorgesehen ist, dem die Dosiereinrichtung (15) nachgeschaltet ist.

17. Vorrichtung nach einem der Ansprüche 9 bis 16, dadurch gekennzeichnet, daß an dem Druckspeicher (20) oder zwischen diesem und der Plastifiziereinheit eine Temperiereinheit für das Treibmittel vorgesehen ist.

18. Vorrichtung nach einem der Ansprüche 9 bis 17, dadurch gekennzeichnet, daß der Düse (3) eine Kalibriereinheit (19) mit größerem freien Querschnitt als der Querschnitt der Düse (15) nachgeschaltet ist.

19. Vorrichtung nach einem der Ansprüche 9 bis 17, dadurch gekennzeichnet, daß der Plastifiziereinheit (1) ein die Polymerschmelze aufnehmender Zwischenspeicher (16) nachgeschaltet ist.

20. Vorrichtung nach Anspruch 19, dadurch gekennzeichnet, daß der Zwischenspeicher (16) eine Kolbendosiereinheit ist, der eine Formeinheit (17) nachgeschaltet ist.
